# EUROPEAN PATENT APPLICATION

(11) **EP 3 845 332 A1**
(43) Date of publication of application: **07.07.2021**
(21) Application number: 21150324.8
(22) Date of filing: 05.01.2021
(51) Int. Cl.: B22F 1/00, B22F 1/02, B23K 26/144, B23K 26/34, C22C 32/00

(54) **ENHANCED COATINGS AND STRUCTURES VIA LASER CLADDING WITH NANO-MODIFIED FEEDSTOCK**

(30) Priority: 06.01.2020 US 202016734680
(71) Applicant: Rohr, Inc., Chula Vista, CA 91910-2098 (US)
(72) Inventor: SHARON, John A., West Hartford, CT Connecticut 06119 (US); SHEEDY, Paul, Bolton, CT Connecticut 06043 (US)
(74) Representative: Dehns

(57) **Abstract**

A system (200) for forming a coating (202; 226) having a plurality of nanosized oxide particles on a work surface (204) is disclosed. In various embodiments, the system (200) includes a laser (210) configured to direct a laser beam (212) at a focal region (214) on the work surface (204); and an applicator (220) configured to direct a nanoparticle coated feedstock powder (222) at the focal region (214) of the work surface (204).

## Description

### FIELD

The present disclosure relates generally to surface coatings and, more particularly, to surface coatings having a nanoparticle modification of a feedstock powder applied to a metallic component via a laser cladding process.

### BACKGROUND

Numerous aerospace products or systems include components that are exposed to harsh operating conditions (*e.g.*, high temperature or salt or sulfur-based environments) that result in corrosion or oxidation to the surfaces of the components. Protective coatings are thus critical to ensure durability. While several coating options exist, many use deposition methods (*e.g*., electrochemical deposition or plating or chemical vapor deposition) that are expensive because of a need to dispose of process byproducts as hazardous waste. Deposition methods also tend to debit or detract from the thermal and electrical properties of the component (*e.g*., the process or coating reduces thermal conductivity for a heat exchanger) or rely upon compositions having constituents (*e.g*., Cr) that may soon be banned due to environmental regulations. To address these issues a protective coating methodology that produces minimal waste, limits property debits to the part, and avoids reliance on systems with regulatory restrictions is desirable.

### SUMMARY

A system for forming a coating having a plurality of nanosized particles on a work surface is disclosed. In various embodiments, the system includes a laser configured to direct a laser beam at a focal region on the work surface; and an applicator configured to direct a nanoparticle coated feedstock powder at the focal region of the work surface.

In various embodiments, the nanoparticle coated feedstock powder comprises a metallic powder. In various embodiments, the nanoparticle coated feedstock powder comprises a plurality of nanosized oxide particles. In various embodiments, the nanoparticle coated feedstock powder is prepared via an acoustic mixing apparatus. In various embodiments, the plurality of nanosized oxide particles is attached to the metallic powder via an electrostatic attraction. In various embodiments, the plurality of nanosized oxide particles comprises a rare earth oxide.

In various embodiments, the laser beam is configured to create a melt pool on the work surface and the applicator is configured to direct the nanoparticle coated feedstock powder at the melt pool. In various embodiments, the melt pool comprises molten material from both the work surface and the nanoparticle coated feedstock powder.

In various embodiments, the system further includes an acoustic mixing apparatus configured to prepare the nanoparticle coated feedstock powder via a resonant acoustic mixing process. In various embodiments, the system also includes a particle feed system configured to transport the nanoparticle coated feedstock powder from the acoustic mixing apparatus to the applicator.

A method of forming a coating containing a plurality of nanosized particles on a work surface is disclosed. In various embodiments, the method includes directing a laser beam at a focal region on the work surface; directing a nanoparticle coated feedstock powder comprising the plurality of nanosized particles toward the focal region of the work surface; and forming a melt pool at the focal region, the melt pool comprising molten material from both the work surface and the nanoparticle coated feedstock powder.

In various embodiments, the method further includes forming a uniform distribution of the plurality of nanosized particles throughout the melt pool. In various embodiments, the method further includes solidifying the melt pool to lock in place the uniform distribution of the plurality of nanosized particles throughout the melt pool.

In various embodiments, the nanoparticle coated feedstock powder comprises a metallic powder and a plurality of nanosized oxide particles. In various embodiments, the nanoparticle coated feedstock powder is prepared via an acoustic mixing apparatus. In various embodiments, the plurality of nanosized oxide particles is attached to the metallic powder via an electrostatic attraction.

In various embodiments, the laser beam is configured to form the melt pool on the work surface and an applicator is configured to direct the nanoparticle coated feedstock powder at the melt pool. In various embodiments, the nanoparticle coated feedstock powder comprises metallic particles that are generally spherical in shape. In various embodiments, the metallic particles comprise an alloy. In various embodiments, the plurality of nanosized oxide particles comprise a rare earth metal.

The forgoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1 illustrates a particle of feedstock powder having its surface coated with nanosized oxide particles, in accordance with various embodiments;
FIG. 2 illustrates a system for forming a coating having nanosized oxide particles on a surface of a metallic component, in accordance with various embodiments;
FIG. 3 illustrates oxidation results for a surface formed with nanosized oxide particles distributed throughout the surface, in accordance with various embodiments; and
FIG. 4 describes a method of forming a coating of nanosized oxide particles on a metallic surface, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

The following disclosure provides a method of coupling a feedstock powder coated with nanosized particles (or nanoparticles) with a laser cladding process to deposit dispersion strengthened coatings onto metallic parts for enhanced corrosion resistance. Resonant acoustic mixing is employed to attach the nanoparticles to the feedstock powder via an electrostatic attraction. The rapid melting from the laser cladding process disperses the nanoparticles in a melt pool and a high solidification rate locks the nanoparticles in place to preclude agglomeration. The end result is a coating with a relatively uniform dispersion of the nanoparticles throughout. The nanoparticles of specific focus are rare earth oxides (*e.g.,* Y₂O₃, CeO₂, or the like), which have historically been shown to exhibit a reactive element effect that slows corrosion. For example, nanosized oxide particles dispersed in a metal matrix provide excellent creep resistance to improve retention of strength at high temperatures. In addition to rare earth oxides, in various embodiments, the nanosized particles may include non-oxides, such as, for example, carbides *(e.g.,* tungsten carbide or titanium carbide or the like), nitrides (*e.g.,* tungsten nitride or zirconium nitride or the like) or borides (*e.g*., aluminum diboride (AlB₂) or titanium diboride (TiB₂) or the like.

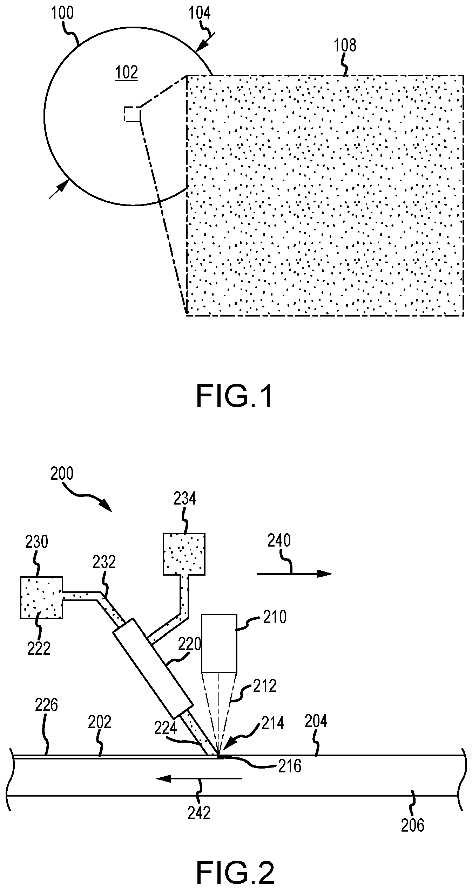

Referring now to FIG. 1, a particle of feedstock powder 100 is illustrated having a generally spherical shape and an outer surface 102 (or a generally spherical outer surface). In addition to generally spherical-shaped particles, in various embodiments, the particles may have other shapes or structures, including, for example, ellipsoidal or oblong shapes or porous or sponge-like structures having irregular shapes. For simplicity, the following disclosure is directed to generally spherically shaped particles, which include spherically shaped masses where a radius or characteristic dimension of a particle varies by less than approximately twenty percent (20%) of an average radius or characteristic dimension. The particle of feedstock powder 100 is representative of a mean size and shape and the composition of all the particles within a batch of feedstock powder. For example, in various embodiments, a characteristic dimension 104 *(e.g.,* a diameter) of the particle of feedstock powder 100, representative of the mean size of the particles within a batch of feedstock powder, may range in size from ten micrometers (10 µm) to one-hundred fifty micrometers (150 µm) and, in various embodiments, may range in size from forty micrometers (40 µm) to sixty micrometers (60 µm) and, in various embodiments, may have a size on the order of fifty micrometers (50 µm). In various embodiments, the particle of feedstock powder 100 is a metallic powder that comprises nickel or a nickel-based alloy. Similarly, in various embodiments, the particle of feedstock powder 100 is a metallic powder comprising aluminum, magnesium, copper, titanium, iron, cobalt, zirconium, hafnium, niobium, tantalum, molybdenum or tungsten, either in pure form or in the form of an alloy. Thus, in various embodiments, a batch of feedstock powder will contain metallic particles that are generally spherical in shape, composed of one or more of the materials identified above and exhibit a mean size within a range from ten micrometers (10 µm) to one-hundred fifty micrometers (150 µm).

Still referring to FIG. 1, the outer surface 102 of the particle of feedstock powder 100 is illustrated as being coated (or decorated) with a plurality of nanosized oxide particles 108 (or nanoparticles). In various embodiments, a mean size of the nanoparticles within the plurality of nanosized oxide particles 108 ranges in size from one-half nanometer (0.5 nm) to seven-hundred nanometers (700 nm) and, in various embodiments, the mean size of the nanoparticles within the plurality of nanosized oxide particles 108 ranges in size from one nanometer (1 nm) to three-hundred nanometers (300 nm). In various embodiments, the composition of the plurality of nanosized oxide particles 108 may comprise a rare earth oxide, such as, for example, yttrium oxide (Y₂O₃), cerium oxide (CeO₂) or lanthanum oxide (La₂O₃) (or any other of the rare earth oxides comprising a rare earth metal). In various embodiments, the composition of the plurality of nanosized oxide particles 108 may comprise other oxides, such as, for example, zirconium dioxide (ZrO₂), hafnium dioxide (HfO₂), titanium dioxide (TiO₂), aluminum oxide (Al₂O₃), magnesium oxide (MgO), calcium oxide (CaO), strontium oxide (SrO), barium oxide (BaO), niobium pentoxide (Nb₂O₅), tantalum pentoxide (Ta₂O₅) or various combinations thereof.

In various embodiments, the plurality of nanosized oxide particles 108 is coated onto the outer surface 102 of the particle of feedstock powder 100 via an acoustic mixing process or a resonant acoustic mixing process. Rather than mechanical agitation, via, for example, a drive mechanism or impeller, acoustic mixing induces microscale turbulence through propagating acoustic waves throughout a medium, such as, in this instance, the nanosized oxide particles and the feedstock powder. The acoustic mixing process may be carried out using an acoustic mixer, such as, for example, those sold under the tradename Resodyn™, by Resodyn Acoustic Mixers, Inc., of Butte, MT. In various embodiments, for example, an acoustic mixer is able to coat between one to thirty-five kilograms (1 to 35 kg) of feedstock powder with nanoparticles in approximately five minutes (5 min). In various embodiments, a volume percentage of the nanoparticles to feedstock powder ranges from between one-tenth volume percent (0.1 vol %) to sixteen volume percent (16.0 vol %) or more; while in various embodiments, a volume percentage of the nanoparticles to feedstock powder ranges from between one-half volume percent (0.5 vol %) to three volume percent (3.0 vol %). The acoustic mixing process is advantageous as it provides a substantial improvement over more conventional methods of doping feedstock powders with nanosized oxides, whereby the oxides are ball-milled or attrition milled or otherwise mechanically alloyed to form the feedstock powder, which are expensive and prone to material contamination and morphology changes. Instead, the feedstock powder experiences no adverse effects on the individual metallic particles of the powder maintaining their generally spherical shape, as the nanoparticles are attached to the individual metallic particles of the feedstock powder via an electrostatic attraction.

Referring now to FIG. 2, a system 200 for forming a coating 202 on a work surface 204 of a component 206 is illustrated, in accordance with various embodiments. The system 200 includes a laser 210, or similar source of electromagnetic energy, configured to direct a laser beam 212 toward the work surface 204 of the component 206. The system 200 further includes an applicator 220 configured to direct, spray or otherwise apply a nanoparticle coated feedstock powder 222 to the work surface 204 in the vicinity of the laser beam 212. In various embodiments, the nanoparticle coated feedstock powder 222 is prepared as described above with reference to FIG. 1; that is, by coating (or decorating) a feedstock powder with nanosized oxide particles via a resonant acoustic mixing process. Without loss of generality, an acoustic mixing apparatus 230 (or a resonant acoustic mixing apparatus) may be configured to provide the nanoparticle coated feedstock powder 222 to the applicator 220, either as part of the system 200 or as a separate component of the system 200. For example, where the acoustic mixing apparatus 230 is part of the system 200, a particle feed system 232 or similar device *(e.g.,* a conduit or a conveyor) may be configured to transport the nanoparticle coated feedstock powder 222 to the applicator 220 *(e.g.,* where the system 200 is an industrial manufacturing system). Where the acoustic mixing apparatus 230 is not part of the system 200, then the nanoparticle coated feedstock powder 222 may be made available to the applicator via, for example, a hopper 234.

As further illustrated in FIG. 2, in various embodiments, the nanoparticle coated feedstock powder 222 is applied as a stream 224 configured to hit the work surface 204 of the component 206 within a focal region 214 of the laser beam 212. So configured, the system 200 provides a laser cladding process for *in-situ* formation of a dispersion strengthened coating 226 at the work surface 204 of the component 206. Rapid melting and solidification of a melt pool 216 at or just beneath the focal region 214 is leveraged to disperse the nanosized oxide particles throughout the coating 202 and lock them in place upon solidification of the melt pool 216. For example, when the feedstock powder component of the nanoparticle coated feedstock powder 222 melts, the resulting melt pool is highly turbulent, which serves to distribute the nanosized oxide particles uniformly throughout the melt pool 216, which will generally include molten material from both the work surface 204 of the component 206 and the nanoparticle coated feedstock powder 222. The rapid solidification of the laser cladding process then locks the nanosized oxide particles in place; whereas, with a slower solidification process, the particles may separate from the molten metal of the work surface 204 of the component 206 and the feedstock powder and migrate toward the surface of the melt pool 216, agglomerate, and leave a less uniform distribution. In various embodiments, the laser 210 and the applicator 220 are configured to translate in a first direction 240 with respect to the component 206, or the component 206 is configured to translate in a second direction 242 with respect to the laser 210 and the applicator 220. In various embodiments, e.g., where the component 206 comprises a curved surface, the laser 210 and the applicator 220 may also move in a rotational direction relative to the component 206.

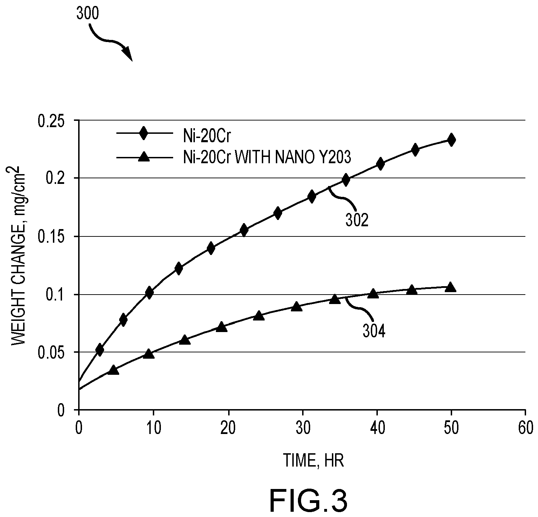

Referring now to FIG. 3, a graph 300 of results for an example coating prepared in accordance with various embodiments is illustrated. A component made from nichrome (*e.g*., a nickel alloy comprising 80% nickel and 20% chromium) had its surface treated via laser cladding with a nanoparticle coated feedstock powder, with the feedstock powder component comprising nichrome and the nanosized oxide particle component comprising Y₂O₃. Both the surface treated component and a non-surface treated component of identical size and dimension were placed in a furnace and exposed to air at 900°C for fifty hours (50 hrs). The graph 300 provides a first plot 302 illustrating results for the non-surface treated component and a second plot 304 illustrating results for the surface treated component. As illustrated, after fifty hours, the non-surface treated component exhibits a weight change due to oxidation of approximately 0.23 mg/cm², while the surface treated component exhibits a weight change due to oxidation of only 0.1 mg/cm²; in addition, the corresponding parabolic rate constant was reduced by greater than seventy percent (>70%). The presence of the nanosized oxide particles (Y₂O₃) slows the growth of oxidation on the dispersion strengthened coating.

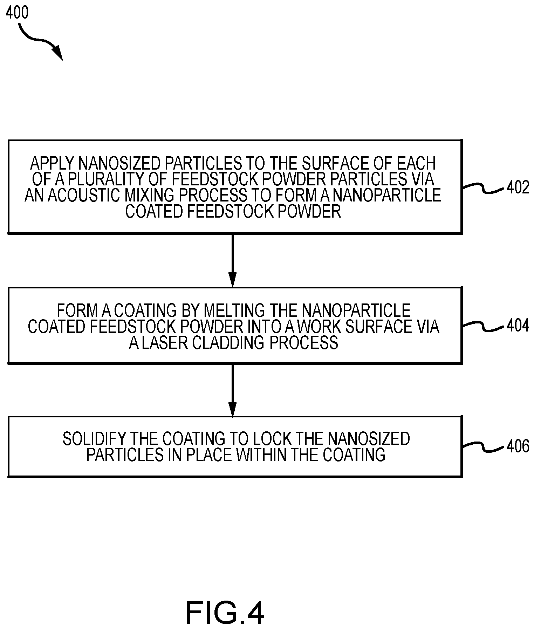

Referring now to FIG. 4, a method 400 of forming a coating containing nanosized particles on a work surface *(e.g.,* a metallic surface of a component) is described as having the following steps. A first step 402 includes applying the nanosized particles to the surface of each of a plurality of feedstock powder particles via an acoustic mixing process to form a nanoparticle coated feedstock powder. A second step 404 includes forming the coating by melting the nanoparticle coated feedstock powder into the work surface via a laser cladding process. A third step 406 includes solidifying the coating to lock the nanosized particles in place within the coating.

Benefits, other advantages, and solutions to problems have been described herein with regard to specific embodiments. Furthermore, the connecting lines shown in the various figures contained herein are intended to represent exemplary functional relationships or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above described concepts can be used alone or in combination with any or all of the other above described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. A system (200) for forming a coating (202; 226) having a plurality of nanosized particles (108) on a work surface (204), comprising:
a laser (210) configured to direct a laser beam (212) at a focal region (214) on the work surface (204); and
an applicator (220) configured to direct a nanoparticle coated feedstock powder (100; 222) at the focal region (214) of the work surface (204).

2. The system (200) of claim 1, wherein the laser beam (212) is configured to create a melt pool (216) on the work surface (204) and the applicator (220) is configured to direct the nanoparticle coated feedstock powder (100; 222) at the melt pool (216).

3. The system (200) of claim 2, wherein the melt pool (216) comprises molten material from both the work surface (204) and the nanoparticle coated feedstock powder (100; 222).

4. The system (200) of any preceding claim, further comprising an acoustic mixing apparatus (230) configured to prepare the nanoparticle coated feedstock powder (100; 222) via a resonant acoustic mixing process.

5. The system (200) of claim 4, further comprising a particle feed system (232) configured to transport the nanoparticle coated feedstock powder (100; 222) from the acoustic mixing apparatus (230) to the applicator (220).

6. A method of forming a coating (202; 226) containing a plurality of nanosized particles (108) on a work surface (204), comprising:
directing a laser beam (212) at a focal region (214) on the work surface (204);
directing a nanoparticle coated feedstock powder (100; 222) comprising the plurality of nanosized particles (108) toward the focal region (214) of the work surface (204); and
forming a melt pool (216) at the focal region (214), the melt pool (216) comprising molten material from both the work surface (204) and the nanoparticle coated feedstock powder (100; 222).

7. The method of claim 6, further comprising forming a uniform distribution of the plurality of nanosized particles (108) throughout the melt pool (216), and optionally further comprising solidifying the melt pool (216) to lock in place the uniform distribution of the plurality of nanosized particles (108) throughout the melt pool (216).

8. The system (200) or method of any preceding claim, wherein the nanoparticle coated feedstock powder (100; 222) comprises a metallic powder.

9. The system (200) or method of claim 8, wherein the nanoparticle coated feedstock powder (100; 222) comprises a plurality of nanosized oxide particles (108).

10. The system (200) or method of claim 9, wherein the nanoparticle coated feedstock powder (100; 222) is prepared via an acoustic mixing apparatus (230).

11. The system (200) or method of claim 10, wherein the plurality of nanosized oxide particles (108) is attached to the metallic powder via an electrostatic attraction.

12. The system (200) or method of claim 10 or 11, wherein the plurality of nanosized oxide particles (108) comprises a rare earth oxide.

13. The method of any of claims 6 to 12, wherein the laser beam (212) is configured to form the melt pool (216) on the work surface (204) and an applicator (220) is configured to direct the nanoparticle coated feedstock powder (100; 222) at the melt pool (216).

14. The method of claim 13, wherein the nanoparticle coated feedstock powder (100; 222) comprises metallic particles that are generally spherical in shape.

15. The method of claim 14, wherein the metallic particles comprise an alloy, wherein the plurality of nanosized particles (108) optionally comprise a rare earth metal.
